Europäisches Patentamt

European Patent Office

Office européen des brevets

(19)

(11) EP 0 648 998 B1

(12) FASCICULE DE BREVET EUROPEEN

(45) Date de publication et mention
de la délivrance du brevet:
**28.01.1998 Bulletin 1998/05**

(51) Int Cl.6: **G01B 7/04**, G01B 7/02,
G01D 5/24

(21) Numéro de dépôt: **94810543.2**

(22) Date de dépôt: **21.09.1994**

(54) **Instrument de mesure de longueurs ou d'angles**

Instrument zum Messen der Längen oder Winkel

Instrument for measuring the lengths or angles

(84) Etats contractants désignés:
**DE FR GB**

(30) Priorité: **19.10.1993 CH 3150/93**

(43) Date de publication de la demande:
**19.04.1995 Bulletin 1995/16**

(73) Titulaire: **Meyer, Hans Ulrich**
**CH-1110 Morges (CH)**

(72) Inventeur: **Meyer, Hans Ulrich**
**CH-1110 Morges (CH)**

(74) Mandataire: **ARDIN & CIE S.A.**
**Rue de Genève 122**
**Case Postale 56**
**1226 Genève-Thônex (CH)**

(56) Documents cités:
**EP-A- 0 184 584         EP-A- 0 270 440**
**EP-A- 0 271 436         EP-A- 0 400 626**
**EP-A- 0 435 429         EP-A- 0 537 800**
**DE-A- 4 009 977         DE-A- 4 017 954**
**FR-A- 2 668 822**

## Description

La présente invention a pour objet un instrument de mesure de longueurs ou d'angles comprenant un capteur capacitif comportant des électrodes émettrices destinées à émettre des signaux capacitifs et arrangées suivant au moins un premier réseau linéaire ou curvilinéaire, ces électrodes émettrices étant connectées à des premiers moyens générant sur ces électrodes une première distribution spatiale périodique de potentiels électriques se déplaçant par pas de transitions le long de ce premier réseau, le capteur comportant des électrodes réceptrices destinées à capter des signaux capacitifs et reliées à des seconds moyens pour déterminer la position relative le long de ce premier réseau d'un organe présentant un second réseau spatialement périodique d'éléments susceptibles d'influencer les signaux capacitifs émis et reçus.

Plusieurs réalisations de tels instruments sont connues. Un capteur capacitif rotatif comportant des réseaux curvilignes d'électrodes interdigitées, c'est-à-dire avec les électrodes paires reliées entre elles et les impaires reliées entre elles, est décrite dans le brevet US 2,674,729. Une telle configuration comporte deux électrodes par période T du signal, autrement dit les signaux électriques sur les électrodes paires et impaires sont en opposition de phase. Afin de pouvoir interpoler avec plus de précision sur une période spatiale Tx, il est avantageux d'avoir un plus grand nombre N d'électrodes par période: par exemple si la détermination de la position se fait en mesurant la phase, après démodulation si nécessaire du signal capté par les électrodes réceptrices, le rapport des fréquences entre la fréquence de l'onde harmonique, due au pas Tx/N des électrodes, et la fréquence de l'onde fondamentale sera de N; plus N sera élevé, plus il sera facile d'éliminer cette onde harmonique par filtrage.

Dans le brevet US 3,342,935 la position fine d'un pointeur sur une tablette est détectée en recevant dans le pointeur les signaux émis par deux réseaux orthogonaux d'électrodes filiformes, donc un réseau par axe de mesure, les électrodes de chaque réseau étant réliées à quatre signaux sinusoïdaux en quadrature de phase dans la séquence, en degrés, 0,90,180,270,0,90, etc.. On a donc quatre électrodes par période spatiale Tx. Dans toutes ces réalisations, toutes les électrodes du capteur et de la règle doivent être connectées, rendant ainsi les connections entre règle et capteur nécessaires.

Le brevet DE 2.218.824 prévoit une lecture des électrodes de la règle par couplage capacitif. Le brevet GB 2.009.944 préconise également une lecture capacitive des électrodes de la règle pour un capteur déterminant la position relative de la règle par une méthode de mesure de phase. Dans les deux cas on élimine le besoin d'une liaison galvanique entre règle et capteur au prix d'un élargissement de la règle et du capteur. En effet, au moins une électrode réceptrice doit se trouver le long du réseau d'électrodes émettrices du capteur, pour lire capacitivement les signaux des électrodes réceptrices de la règle; toutefois, afin d'éviter des couplages néfastes directs entre ladite électrode réceptrice et le réseau d'électrodes émettrices, il faut intercaler une électrode de blindage, et la largeur devient alors prohibitive pour beaucoup d'applications potentielles, soit par manque de place, par exemple dans un palpeur cylindrique de faible diamètre, soit pour des raisons économiques, par exemple si le capteur est réalisé sur une pastille de silicium. De plus, comme chaque électrode de la règle doit avoir deux régions distinctes pour recevoir les signaux des électrodes émettrices et pour coupler le signal reçu à, ou aux électrodes réceptrices, la géométrie des électrodes de la règle n'est pas triviale. La réalisation en particulier d'une règle plane pouvant être lue par de tels capteurs sur deux coordonnées en serait rendue pratiquement impossible.

La présente invention a pour but de remédier à ces inconvenients et l'invention est caractérisée, à cet effet, en ce que le capteur comprend des troisièmes moyens pour déconnecter momentanément et tour à tour les électrodes émettrices du premier réseau desdits premiers moyens et pour les connecter momentanément aux seconds moyens de façon qu'elles deviennent momentanément réceptrices, lesdits troisièmes moyens étant agencés de façon que les électrodes momentanément réceptrices soient arrangées suivant une seconde distribution spatialement périodique, les premières et secondes distributions se déplaçant par pas de transitions en alternance de manière que le déplacement d'une distribution se fait dans les intervalles entre le déplacement de l'autre distribution, ledit organe créant une fluctuation périodique du signal reçu sur les électrodes momentanément réceptrices.

De cette façon on peut obtenir un instrument simple et de faible coût, même si entièrement réalisé sur une pastille de silicium, par exemple, puisque le réseau d'électrodes étroit permet une petite surface donc un capteur de très petite dimension. De plus, comme il s'avère dans la pratique que les variations locales de distance entre règle et capteur sont la source principale des erreurs de mesure, un réseau plus compact d'électrodes donnera de meilleurs résultats en réduisant ces variations locales entre capteur et règle données.

Un tel capteur peut être configuré pour lire plusieurs sortes d'organes ou règles, avec électrodes, relief ou autres paramètres périodiques influant sur les coefficients de couplage. Les règles peuvent avoir une géométrie très simple: si elle comporte des électrodes isolées, celles-ci peuvent être rectangulaires et ne nécessitent pas d'écran pour les séparer. Elles peuvent être plus larges, plus étroites ou de même largeur que celles du capteur; ceci permet par exemple une extension très aisée à une règle permettant à deux capteurs selon l'invention de mesurer en deux coordonnées, cette règle ayant un reseau d'électrodes isolées disposées en damier.

Avantageusement les seconds moyens sont agencés de façon à évaluer la phase du signal reçu sur les électrodes momentanément réceptrices après démodulation pour déterminer la position relative entre le capteur et ledit organe. Ceci permet une méthode de mesure précise et simple.

Selon un mode d'exécution préféré lesdits premiers moyens sont agencés de façon que la première distribution spatialement périodique de période 2Tx comprend des séries alternées d'un premier groupe de N électrodes reliées à un premier potentiel suivie d'un second groupe de N électrodes reliées à un second potentiel, N étant un nombre entier supérieur à 3, lesdits troisièmes moyens étant agencés de façon que la seconde distribution spatialement périodique est telle qu'au moins une électrode de chacun des groupes de N électrodes soit déconnectée pour être momentanément réceptrice et telle que les électrodes momentanément réceptrices soient disposées entre au moins deux électrodes reliées au même potentiel, ledit second réseau présentant une période Tx.

Cette construction assure une grande précision de mesure tout en permettant une électronique simple. Le fait que les distributions aient des périodes spatiales doubles de celle de la règle permet de supprimer l'influence de variations de potentiel entre le curseur et la règle qui affectent toutes les électrodes de la règle et de travailler avec des écarts plus grands entre règle et capteur, du fait de l'atténuation moins rapide du signal avec l'écart pour une période spatiale plus grande.

Le fait que les électrodes voisines de l'électrode momentanément réceptrice ne changent pas de potentiel pendant la transition suppriment les couplages directs entre électrodes adjacentes.

Avantageusement les pas de transition du déplacement de la première et seconde distribution comportent un nombre M d'électrodes tel que M est un nombre entier proche de N/2.

Un tel déplacement est en effet équivalent à un déplacement bien plus faible, d'un pas de M-N/2 électrodes, mais dont la première distribution changerait de polarité à chaque transition. Cette disposition est avantageuse, d'une part à cause du nombre élevé d'électrodes (environ la moitié) dont le changement de polarité fait varier le champ électrique à chaque transition, d'autre part parce qu'une démodulation simple, par changement de polarité du signal capté à chaque transition, produit un signal équivalent à celui (non démodulé) d'un déplacement bien plus lent, ayant des pas de M-N/2 électrodes; les signaux de basse fréquence indésirables, provenant par exemple de charges statiques lors de mouvements entre règle et curseur ou des effets piézoélectriques apparaissant lors de chocs ou vibrations, sont par contre rejetés par la démodulation vers des fréquences élevées où il est aisé de les filtrer.

De façon préférée, la distribution des électrodes appartenant audit premier ou second groupe avant un pas de transition de ladite première distribution est symétrique à la distribution des électrodes appartenant audit premier ou second groupe après le pas de transition de ladite première distribution, la ligne médiane de la ou des électrodes momentanément réceptrices se trouvent dans ledit premier ou second groupe constituant une droite de symétrie des deux distributions d'électrodes avant et après le pas de transition.

Cette distribution assure un signal net nul sur les électrodes momentanément réceptrices en l'absence d'une règle ou lorsque les électrodes de celle-ci sont également placées d'une manière symétrique par rapport aux électrodes momentanément réceptrices, ce qui facilite grandement la détermination de la mesure. Ceci permet aussi de vérifier s'il y a des couplages indésirables sur le capteur, puisque le cas échéant le signal net ne sera pas nul en l'absence d'une règle ou en la présence d'une règle factice sans électrodes.

Favorablement, l'instrument comprend un générateur de signaux relié à 2N premières lignes ($P_a$-$P_p$) et agencé de façon à générer à l'aide d'un signal horloge une suite de signaux émis sur l'une ($P_a$) des premières lignes et à décaler cette suite de signaux de 1 à 2N-1 périodes de ce signal horloge pour obtenir les 2N-1 autres suites de signaux sur les autres premières lignes ($P_b$-$P_p$), chaque électrode étant susceptible d'être reliée à l'une des premières lignes de façon à obtenir ladite première distribution spatiale périodique.

Avantageusement le générateur de signaux est relié à N secondes lignes (Rai-Rhp) et agencé de façon à générer ladite seconde distribution les signaux générés sur les N secondes lignes (Rai-Rhp) commandant l'ouverture et la fermeture de contacteurs électroniques d'entrée ($S_1$) ouvrant et fermant la liaison des électrodes avec les 2N premières lignes (Pa-Pp) et fermant, respectivement ouvrant des contacteurs de sortie ($S_2$,$S_3$) reliant les électrodes aux entrées d'un dispositif à amplification différentielle. Cette construction permet une électronique de commande simple et très sure.

Selon une variante avantageuse, chaque électrode est reliée à un premier contacteur de sortie ($S_2$) suivi d'un second contacteur de sortie ($S_3$), la partie commune entre les deux contacteurs de sortie étant mise à un potentiel constant, lorsque les deux contacteurs de sortie sont ouverts. Cette disposition permet d'éviter tout couplage capacitif néfaste des électrodes vers le dispositif à amplication différentielle.

Selon une variante favorable les contacteurs de sortie ($S_2$, $S_3$) sont reliés à l'une de deux troisième lignes ($I_1$,$I_2$) connectées chacune par un commutateur ($S_5$,$S_6$) à des amplificateurs, suivi d'échantillonneurs dont les sorties sont reliées aux entrées d'un amplificateur différentiel suivi d'un filtre et d'un comparateur.

Cette construction permet d'obtenir un circuit électronique de mesure simple et précis.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.

Les figures 1A et 1B montrent respectivement un réseau linéaire et circulaire d'électrodes d'une règle et d'un capteur conforme à l'invention: le capteur peut donc être linéaire (figure IA) ou rotatif (figure 1B).

La figure 2 montre en exemple quatre états successifs de distributions de potentiel et d'électrodes momentanément réceptrices sur les électrodes d'un capteur conforme à l'invention.

La figure 3 montre schématiquement les parties essentielles du circuit électronique d'un capteur conforme à l'invention.

La figure 4 montre les formes d'onde et signaux dudit circuit électronique, les distributions de potentiel et d'électrodes momentanément réceptrices en résultant étant celles partiellement représentées à la figure 2.

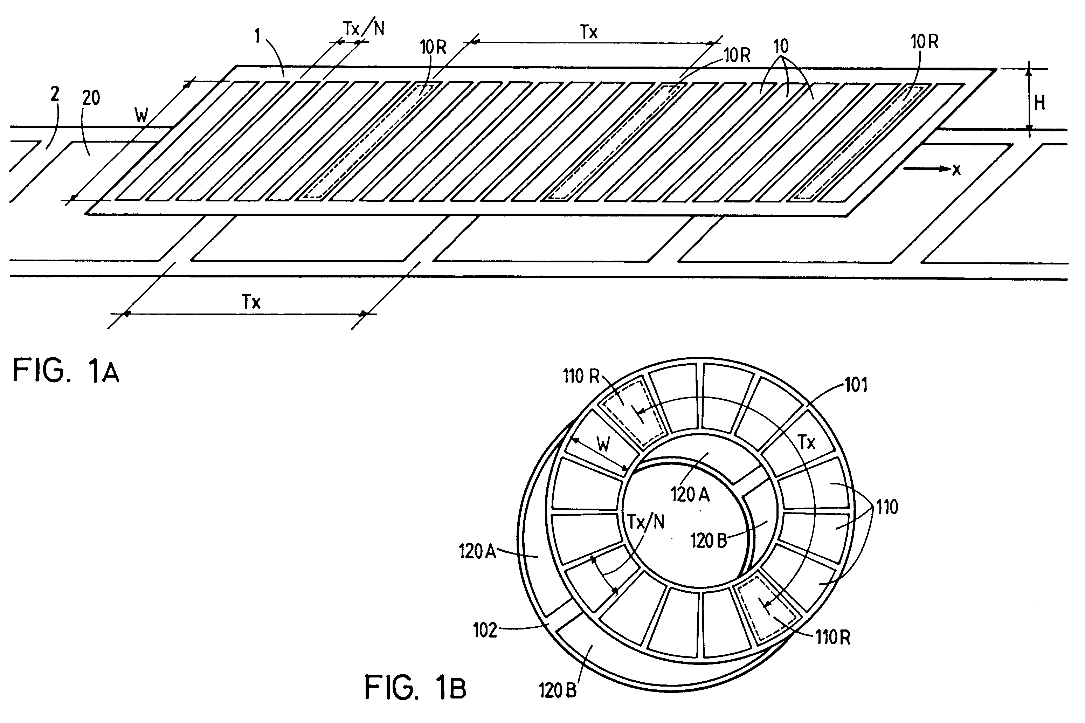

Un instrument conforme à l'invention, comportant un capteur 1 avec un réseau d'électrodes 10, ainsi qu'une règle 2 formée d'un réseau d'électrodes 20 est représenté à la figure 1A. Le capteur 1 et la règle 2 sont face à face, séparés par une distance prédéterminée H. Le capteur 1 peut se déplacer relativement à la règle 2 selon la coordonnée x, qui est la coordonnée mesurée. Le pas le long de x des électrodes 20 de la règle 2 est de Tx, celui des électrodes 10 du capteur 1 de Tx/N, N étant donc le nombre d'électrodes 10 du capteur par pas Tx, ici N=8. Une partie des électrodes 10 du capteur 1 fonctionne momentanément comme électrodes réceptrices 10R, influencées par le champ du reste des électrodes en fonction de leur position relative aux électrodes 20 de la règle 2. Comme la distribution des électrodes réceptrices se déplace sans cesse, toutes les électrodes 10 deviennent tour à tour réceptrices 10R. Toutes les électrodes 10 ont la même forme et les mêmes fonctions. Un avantage de cette configuration simple est que la largeur W perpendiculaire à la direction x du réseau d'électrodes 10 du capteur 1 peut atteindre celle de la règle, ce qui est avantageux surtout dans le cas où la règle et le curseur sont étroits (W<<T) et où la distance H entre règle et capteur devient relativement grande. Les capacités de couplage entre électrodes de la règle et du capteur décroissent alors très fortement avec la largeur W pour une distance H donnée. Alors que pour un rapport W/H>>1 les capacités de couplage sont proportionnelles à la largeur W, lorsque cette largeur W devient inférieure à la distance H, elles décroissent quasiment comme le carré du rapport H/W, en admettant que la largeur W des électrodes 10 du capteur 1 soit à peu près celle des électrodes 20 de la règle 2.

Un tel dimensionnement avec une largeur W beaucoup plus petite que le pas Tx et une distance H de l'ordre de grandeur de la largeur W se rencontre souvent dans des codeurs rotatifs qui doivent avoir une caractéristique absolue sur tout ou partie d'un tour et dont le diamètre extérieur doit être faible, alors que le diamètre intérieur est limité vers le bas par la présence d'un arbre dans l'axe dudit codeur et où la distance H ne peut être minimisée pour des raisons constructives. Il faut alors profiter au maximum de l'espace donné, comme c'est le cas pour l'arrangement d'électrodes montré à la figure 1B. Le capteur 101 comporte un réseau annulaire de 16 électrodes 110 se trouvant en face d'une règle 102, également annulaire, comportant 2 électrodes 120A, 120B; la période Tx circonférentielle correspond donc à un demi-tour. La distribution des électrodes momentanément réceptrices 110R, ici au nombre de deux et séparées de 180 degrés, se déplace sans cesse le long de la circonférence; on évite ainsi d'avoir une électrode réceptrice annulaire autour du réseau d'électrodes 110, ce qui avec l'électrode de blindage nécessairement intercalée, réduirait de façon drastique la largeur W des électrodes du réseau, donc les coefficients de couplage, donc les signaux utilisables. L'arrangement d'électrodes rendu possible par les caractéristiques de l'invention convient donc bien à ce cas.

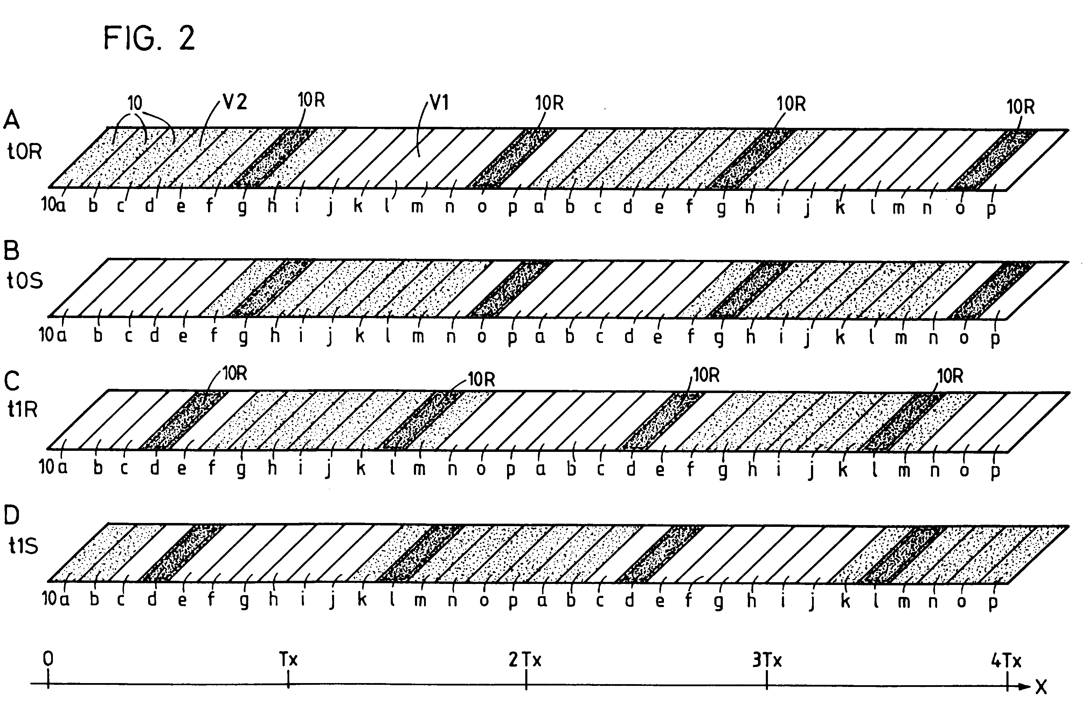

D'autres avantages sont mis en évidence par la description plus détaillée du fonctionnement d'un capteur 1 conforme à l'invention, en commençant par l'analyse des effets sur les électrodes momentanément réceptrices 10R des pas de transitions, le long du réseau d'électrodes 10, d'une distribution de potentiel. A cet effet, la figure 2 montre en exemple quatre états successifs de distributions de potentiel et d'électrodes momentanément réceptrices 10R sur un ensemble de 32 électrodes d'un capteur conforme à l'invention. Pour la commodité du raisonnement, on admet que ces 32 électrodes forment la partie centrale d'un réseau linéaire beaucoup plus long; des mesures propres à éliminer les perturbations dues aux extrémités des réseaux seront proposées plus loin.

La distribution de potentiel montrée à la figure 2 se compose de 2 potentiels: V1 (en blanc), V2 (en gris). A l'exception des électrodes momentanément réceptrices 10R, toutes les électrodes 10 du réseau sont soit à V1, soit à V2. Cette distribution de potentiel se repète toutes les 16 électrodes, alors que la période Tx de la règle telle que montrée à la figure 1, correspond à 8 électrodes (N=8): la distribution de potentiel a donc une période de 2Tx. C'est aussi le cas de la distribution des électrodes momentanément réceptrices 10R, même si en apparence il y en a une toutes les 8 électrodes. En effet, dans cette configuration les électrodes momentanément réceptrices 10R sont alternativement reliées à deux entrées d'amplificateur (pas illustrées à la figure 2), donnant également une périodicité de 2Tx pour cette distribution. A un instant donné on retrouve donc toutes les 16 électrodes 10 le même potentiel et la même fonction, c'est-à-dire connectée à V1 ou V2, ou réceptrice 10R, reliée à une des deux entrées d'amplificateur. Aussi les électrodes de la figure 2 sont-elles annotées des 16 indices a-p, identifiant leur position relative dans un intervalle de 2Tx, chaque lettre apparaissant deux fois dans les 32 électrodes montrées à la figure 2. Les électrodes designées par la même lettre sont donc toujours simultanément au même potentiel et ont la même fonction. Les distributions montrées à la figure 2 sont, à l'instant tOR, comme suit: les électrodes 10a-10h, sauf 10g, momentanément réceptrice, sont à V2, les électrodes 10i-10p, sauf 10o, momentanément réceptrice, sont à V1. A l'instant suivant, tOS, la distribution de potentiel s'est décalée de 5 électrodes, donc de 5Tx/8 vers la droite: les électrodes 10f, 10h-10m sont à V2, et les électrodes 10n, 10p, 10a-10e sont à V1; les électrodes momentanément réceptrices 10g, 10o n'ont pas bougé, et captent le signal engendré par la transition de la distribution de potentiel. En effet, les groupes de 5 électrodes des 10a-10e passent du potentiel V2 à V1, et les groupes de 5 électrodes 10i-10m passent de V1 à V2, alors que les électrodes 10f et 10h, voisines de l'électrode momentanément réceptrice 10g, ainsi que 10n et 10p, voisines de 10o, restent au même potentiel. Par l'influence des structures périodiques Tx de la règle, telles que des électrodes non illustrés à la figure 2, les pas de transition des potentiels vont provoquer une variation de potentiel sur les électrodes momentanément réceptrices 10g et 10o. Cette variation de potentiel est fonction de la position relative des électrodes de la règle et du capteur. Si les électrodes sont exactement en face des électrodes momentanément réceptrices 10g et 10o, les couplages, par ces électrodes de la règle, depuis les groupes de 5 électrodes 10a-10e et 10i-10m seront par symétrie égaux donc les variations de signaux nets couplés sur les électrodes 10g et 10o seront nulles puisque les sauts de potentiel des groupes de 5 électrodes sont opposés. Si, par contre, les électrodes de la règle étaient légèrement déplacées vers la droite, le couplage des groupes de 5 électrodes 10a-10e augmenterait vers les électrodes momentanément réceptrices 10g et diminuerait vers les électrodes momentanément réceptrices 10o, alors que pour les groupes de 5 électrodes 10i-10m la variation inverse interviendrait. En admettant que le potentiel V1 soit le plus élevé, on aurait donc-un augmentation de potentiel sur les électrodes momentanément réceptrices 10g et une diminution de potentiel sur les électrodes 10o. Il est évident que si les électrodes de la règle étaient légèrement déplacées vers la gauche, au lieu de la droite, on obtiendrait une diminution de potentiel sur les électrodes 10g et une augmentation de potentiel sur les électrodes 10o. Si les électrodes de la règle, au lieu d'être exactement en face des électrodes 10g et 10o étaient exactement équidistantes de celles-ci, donc décalées de Tx/2, la variation du signal couplé sur les électrodes 10g et 10o serait aussi nulle.

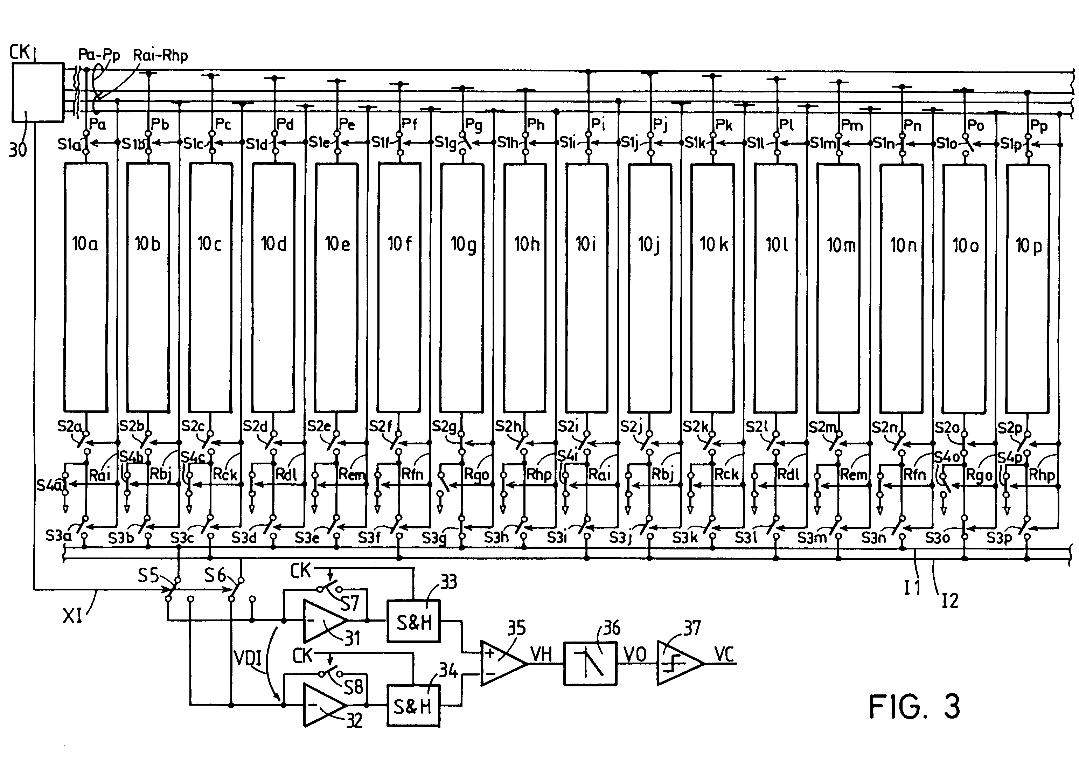

On voit donc que les variations de potentiel sur les électrodes momentanément réceptrices 10R décalées d'une période Tx sont toujours d'amplitude égale mais de signe opposé et que cette amplitude est une fonction périodique, de période Tx, du décalage entre ces électrodes momentanément réceptrices et les électrodes de la règle. En reliant donc une moitié des électrodes momentanément réceptrices 10R à une entrée d'un amplificateur différentiel et l'autre moitié à l'autre entrée de cet amplificateur, on double le signal utile tout en supprimant l'influence de variations de potentiel entre règle et capteur dues à des couplages parasites externes aux électrodes de la règle et du capteur, puisque ces couplages se compensent en ayant la même amplitude et la même polarité sur les deux entrées de l'amplificateur différentiel (Figure 3).

A l'instant suivant, t1R, c'est la distribution des électrodes momentanément réceptrices (10R) qui s'est décalée de 5 électrodes, donc de 5Tx/8 vers la droite. Ces électrodes momentanément réceptrices sont maintenant les électrodes 10l et 10d alors que les électrodes 10g et 10o sont de nouveau connectées à V1 et V2. La distribution de potentiel sur les autres électrodes reste, elle, inchangée. Ce n'est qu'à l'instant suivant, t1S, qu'elle se décalera également de 5 électrodes (5 Tx/8) vers la droite, alors que les électrodes momentanément réceptrices 10l et 10d receuilleront les variations de signaux couplés par les transitions, dues à ce décalage, de V2 à V1 sur les groupes de 5 électrodes 10f-10j et de V1 à V2 sur les groupes de 5 électrodes 10n, 10o, 10p, 10a, 10b. Ici encore, les électrodes voisines des électrodes momentanément réceptrices 10l et 10d, donc 10k, 10m, 10c, 10e n'ont pas changé de potentiel.

L'exemple, montré à la figure 2, de distributions de potentiel et d'électrodes momentanément réceptrices d'un capteur conforme à l'invention, illustre bien les caractéristiques de ces distributions nécessaires au bon fonctionnement de tels capteurs. On voit en particulier que les distributions de potentiel avant et après une transition sont symétriques autour du milieu des électrodes momentanément réceptrices durant ladite transition: si on considère par exemple ces distributions aux instants tOR et tOS, on voit que, par rapport à l'électrode momentanément réceptrice 10g, il y a une électrode 10h à sa droite et six 10a-10f à sa gauche qui sont au potentiel V2 à l'instant tOR, alors qu'en tOS on a une électrode 10f à sa gauche et six 10h-10m à sa droite au même potentiel V2. On remarque également que les électrodes voisines des électrodes momentanément réceptrices 10f et 10h dans l'exemple précité restent au même potentiel. La ligne médiane des électrodes momentanément réceptrice constitue une droite de symétrie pour les distributions d'électrodes avant et après le pas de transition.

En admettant qu'on a N électrodes par periode Tx, M électrodes par pas de transition, on voit qu'à chaque pas de transition la distribution de potentiel ne change pas sur des espaces correspondant à N-M électrodes contiguës. Pour les raisons de symétrie données plus haut, les électrodes momentanément réceptrices contiguës, au nombre de R, doivent se trouver au milieu de ces espaces correspondant à N-M électrodes. Il s'ensuit que si N-M est pair, R ne peut être que pair et que si N-M est impair, R ne peut être qu'impair : en particulier, il ne peut y avoir une seule électrode momentanément réceptrice (R=1) que si N-M est impair.

En numérotant les N électrodes d'une période Tx de gauche à droite à la figure 2 par un indice variant de 1 à N, la première électrode momentanément réceptrice aura pour indice :

$$J = \frac{N + M - R}{2} + 1$$

et dans le cas d'une seule électrode momentanément réceptrice (R=1)

$$J = \frac{N + M + 1}{2}$$

Ainsi pour une période Tx de 8 électrodes et un pas de transition de 5 électrodes, l'indice J de l'électrode momentanément réceptrice sera 7, correspondant bien à l'électrode 10g de la figure 2. Une autre configuration favorable est donnée par une période Tx de 16 électrodes et un pas de transition de 9 électrodes, l'indice J de l'électrode momentanément réceptrice étant alors de 13.

L'utilisation de distributions de potentiel et d'électrodes momentanément réceptrices ayant cette caractéristique de symétrie des distributions de potentiel avant et après transition par rapport aux électrodes momentanément réceptrices 10R assure un signal net nul sur ces dernières en l'absence d'une règle ou lorsque les électrodes de celle-ci sont également placées d'une manière symétrique par rapport aux électrodes momentanément réceptrices. Le fait que les électrodes voisines des électrodes momentanément réceptrices ne changent pas de potentiel pendant la transition supprime les couplages directs entre électrodes adjacentes, très importants à cause de la faible séparation entre celles-ci, et pouvant fortement varier même pour de faibles écarts de cette séparation.

D'autres caractéristiques découlant des distributions montrées à la figure 2 sont aussi avantageuses. Le fait que ces distributions aient des périodes spatiales doubles de celle (Tx) de la règle permet, comme on l'a vu plus haut, de diminuer, voire supprimer l'influence de variations de potentiel entre règle et curseur qui affectent également toutes les électrodes de la règle. Un autre avantage d'une période spatiale double vient de la décroissance moins importante du signal couplé pour une augmentation donnée de la distance H entre règle et capteur. Le choix d'un décalage proche de Tx/2 (ici 5Tx/8) est également avantageux en ce qu'il permet une démodulation simple du signal capté sur les électrodes momentanément réceptrices; cette démodulation a en outre l'avantage de rejeter les signaux perturbateurs de basse fréquence, engendrés par exemple par des charges statiques lors de mouvements entre règle et curseur ou par des effets piézoélectriques lors de chocs ou vibrations. En effet, si on prend par exemple un décalage de 5Tx/8, qui est avec 3 Tx/8 le plus proche de Tx/2 sans en être égal, on trouve la séquence de positions relatives entre électrodes momentanément réceptrices et règle suivante, en admettant partir d'un décalage nul, et en normalisant par rapport à une période spatiale Tx de la règle (donc si Tx était égal à 1) :
0, 5/8, 10/8, 15/8, 20/8, 25/8, 30/8, 35/8, 40/8, etc.

Comme les couplages entre règle et électrodes momentanément réceptrices sont spatialement périodiques, de période Tx, les positions relatives équivalentes normalisées dans une période Tx sont:
0, 5/8, 2/8, 7/8, 4/8, 1/8, 6/8, 3/8, 0, etc.

On a donc N=8 échantillons régulièrement répartis sur Tx, les électrodes 10 du capteur l'étant aussi, et devenant chacune à leur tour momentanément réceptrices 10R, ceci pour autant que le numerateur et le dénominateur du décalage normalisé au pas Tx, ici 5 et 8, ne possèdent pas de diviseur commun entre eux, sinon le nombre d'échantillons sur Tx tombera à N/2 ou moins.

Soit f la fréquence d'échantillonnage : en démodulant par multiplication de la série échantillonnée ci-dessus par la séquence +1,-1,+1,-1, etc., donc de fréquence f/2 on obtient un signal démodulé de fréquence f/8, du fait que les couplages sont spatialement périodiques, de périodes Tx, et que l'inversion de la polarité d'un terme de la série, en le multipliant par -1, revient à remplacer ce terme par un terme décalé de Tx/2, du moins si la fonction périodique est approximativement sinusoïdale de période Tx. La série démodulée correspondrait alors à la séquence de positions suivantes (dans une période) :
0, 1/8, 2/8, 3/8, 4/8, 5/8, 6/8, 7/8, 0, etc.

Le signal ainsi obtenu a donc bien une fréquence de f/8, après un filtrage éliminant les fréquences basses (rejetées en haute fréquence par la démodulation) et les fréquences élevées créées par les transitions entre les valeurs discrètes de la série ci-dessus (bruit de quantisation).

Si le décalage était de 3Tx/8, correspondant à l'autre décalage proche de Tx/2, dans l'exemple de la figure 2, on aurait, en démodulant avec la même séquence de multiplication, également un signal démodulé de fréquence f/8, mais correspondant à une séquence de positions allant à l'encontre du sens du décalage : 0, 7/8, 6/8, 5/8, etc. Le fait d'avoir un décalage proche de Tx/2 est donc avantageux en ce qu'il favorise la réjection des signaux perturbateurs de faible fréquence. En outre, comme la partie des électrodes faisant une transition entre les potentiels V1 et V2 est proportionnelle au décalage, le signal receuilli sur les électrodes momentanément réceptrices augmentera avec le décalage. Mais la limite est donnée par le nombre minimal d'électrodes dont le potentiel ne doit pas changer, et qui est de trois : une électrode momentanément réceptrice et ses deux électrodes voisines, à savoir N - M = 3.

On peut aussi avoir des distributions d'électrodes momentanément réceptrices comportant périodiquement une suite d'électrodes adjacentes, au lieu d'une seule, et des décalages tels que plus d'une électrode voisine, de chaque côté de l'électrode, ou de la suite d'électrodes momentanément réceptrices adjacentes, restent au même potentiel pendant le décalage. L'avantage d'une distribution d'électrodes momentanément réceptrices isolées, donc d'une électrode toutes les demi-périodes Tx, est la simplicité des moyens de commutation. L'inconvénient consiste en une plus faible capacité de couplage vers la règle, mais il est partiellement compensé par une réduction équivalente de la capacité vers le substrat du capteur, les variations de potentiel détectées restant pratiquement les mêmes.

Le nombre N d'électrodes du capteur par demi-période Tx de la règle peut également varier de 4 à un nombre quelconque. Avec un décalage de Tx/4 on a une électrode changeant de potentiel, une électrode momentanément réceptrice flanquée de deux électrodes restant au même potentiel. Le choix optimal de N sera surtout déterminé par la linéarite requise, la performance du filtrage et la complexité de l'électronique nécessaire; un nombre N élevé nécessitera forcément un circuit électronique plus complexe, mais n'exigera pas un filtre performant, les fréquences à rejeter étant beaucoup plus hautes que celle dont on mesure la phase. En pratique, N peut aussi être limité par les procédés de fabrication, par exemple si le substrat du capteur est un circuit imprimé. L'exemple de réalisation d'un capteur conforme à l'invention décrit ici et dans les figures 2,3,4 comporte N=8 électrodes par période Tx, pour la clarté des figures et de l'explication; si le capteur est réalisé sur un substrat semi-conducteur, comme c'est le cas dudit exemple, il sera avantageux d'avoir un nombre N plus élevé, par exemple N=16 (avec un décalage de 9Tx/16 et des électrodes réceptrices non contiguës, par exemple) ou davantage; mais N=16 suffit déjà, même avec un filtage simple, pour obtenir une très bonne précision de linéarité de l'ordre de Tx/1000.

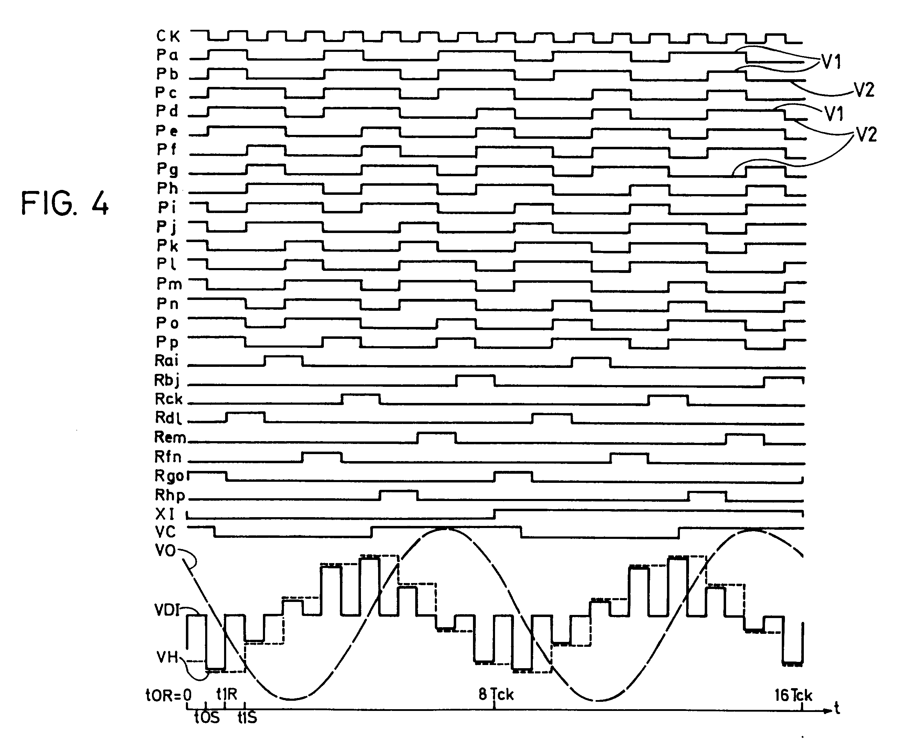

Pour générer les distributions de potentiel et d'électrodes momentanément réceptrices d'un capteur conforme à l'invention, montrées en exemple à la figure 2, ainsi que pour évaluer la position relative entre règle et capteur à partir des signaux recueillis sur les électrodes momentanément réceptrices, un circuit électronique dont les parties essentielles sont schématiquement représentées dans la figure 3 peut être utilisé. Les formes d'onde et signaux générés par ce circuit sont montrés à la figure 4.

Le générateur de signaux 30, synchronisé par un signal d'horloge externe CK, génère sur 16 lignes Pa-Pp et une ligne X1, les signaux périodiques sur 16 périodes d'horloge CK, ainsi que des signaux périodiques sur 8 périodes d'horloge CK, sur 8 lignes Rai-Rhp.

Les 16 lignes Pa-Pp sont connectées par l'intermédiaire des contacteurs S1a-S1p aux électrodes correspondantes 10a-10p, donc la ligne Pa par les contacteurs Sla aux électrodes 10a, Pb par Slb aux électrodes 10b, etc., afin d'assurer la distribution de potentiel (V1 ou V2) sur les électrodes. On voit sur la figure 4 que la distribution de potentiel de ces lignes est, à l'instant tOR choisi comme départ (OT) de l'axe de temps (t), la même que la distribution de potentiel au même instant tOR, sur les électrodes correspondantes, montrées à la figure 2. C'est aussi le cas pour les instants t0S, t1R, t1S. Le générateur de signaux 30 génère donc sur ces lignes Pa-Pp les distributions de potentiel pour les électrodes 10a-10p. Comme la distribution de signaux de la figure 2 a une période spatiale de 2Tx, correspondant à 16 électrodes, et qu'il y a un décalage de 5Tx/8, correspondant à 5 électrodes, à chaque période du signal d'horloge CK, la distribution de potentiel générée sur les lignes Pa-Pp sera la même toutes les 16 périodes d'horloge CK. La logique nécessaire dans le générateur de signaux 30 pour générer ces distributions de potentiel sur les lignes Pa-Pp n'est pas montrée en détail, sa synthèse sur la base des signaux montrés à la figure 4 étant facile, surtout en remarquant que les signaux sur les lignes Pb-Pp peuvent être obtenus par décalage de 1 à 15 périodes d'horloge du signal sur la ligne Pa. On peut donc simplement générer la séquence périodique de la ligne Pa, puis avec un registre à décalage compris dans le générateur de signaux 30, obtenir les 15 autres signaux dans l'ordre:

Pf, Pk, Pp, Pe, Pj, Po, Pd, Pi, Pn, Pc, Ph, Pm, Pb, Pg, Pl, chaque signal étant retardé d'une période d'horloge CK par rapport au précédent. On s'apercoit que les lignes voisines dans cette séquence correspondent à des électrodes 10 distantes de 5Tx/8, précisément à cause des décalages de 5Tx/8 de la distribution de potentiel.

La distribution des électrodes momentanément réceptrices 10R est commandée par les 8 lignes Rai-Rhp, chaque ligne commandant la sélection des électrodes designées par les indices, par exemple les électrodes 10g et 10o par la ligne Rgo. Lorsqu'une ligne est à l'état logique "1", les électrodes correspondantes deviennent momentanément réceptrices. Ici aussi, les signaux sur les lignes Rai-Rhp montrés à la figure 4 correspondent à la distribution des électrodes momentanément réceptrices montrée à la figure 2. On voit par exemple qu'aux instants tOR et tOS la ligne Rgo est à l'état logique "1" sur la figure 4 et que les électrodes 10g et 10o sont momentanément réceptrices sur la figure 2. Comme toutes les 8 périodes d'horloge les mêmes électrodes sont momentanément réceptrices, les signaux sur les lignes Rai-Rhp ont une périodicité de 8 périodes d'horloge CK. On voit que les signaux sur les lignes Rai-Rhp prennent tour à tour l'état "1" dans l'ordre:

Rgo, Rdl, Rai, Rnf, Rkc, Rhp, Rem, Rbj.

Ici aussi, les lignes voisines dans cette séquence contrôlent des distributions d'électrodes momentanément réceptrices décalées de 5Tx/8. Comme la distribution des signaux sur ces lignes change entre les transitions des lignes Pa-Pp, on peut par exemple générer les signaux sur les lignes Rai-Rhp à partir du registre à décalage mentionné plus haut, en utilisant les sorties des étages "maître" pour l'une des distributions, et celles des étages "esclave" pour l'autre. Ceci dit, la logique séquentielle et combinatoire d'un générateur de signaux 30 générant les signaux Pa-Pp, Rai-Rhp et X1 (dont la fonction est décrite plus loin) tels que montrés à la figure 4, est connue de l'homme du métier et peut être réalisée de plusieurs façons.

Les circuits de commutation des électrodes et de traitement du signal reçu par les électrodes momentanément réceptrices doivent par contre être réalisés avec soin pour éviter en particulier des couplages néfastes des signaux du générateur 30 à ces dernières. Ces circuits sont donc montrés schématiquement dans la figure 3. Chaque électrode 10a-10p est reliée par un contacteur électronique Sla-Slp de même indice à une ligne Pa-Pp de même indice (par exemple l'électrode 10a par Sla à Pa). Chaque contacteur Sla-Slp est commandé par celle des lignes Rai-Rhp ayant un indice commun, par exemple S1a et Sli par Rai. La même ligne Rai-Rhp commande également trois autres contacteurs électroniques S2, S3, S4 de même indice que S1, par exemple l'électrode 10a, reliée aux contacteurs S1a, S2a, S3a, S4a commandés par Rai. Ces trois contacteurs S2, S3, S4 relient ou non les électrodes 10 de même indice à une des deux lignes réceptrices I1 ou I2. Lorsque le signal de commande sur une ligne, Rai par exemple, est à l'état logique "0", il ferme par exemple le contacteur S1a, reliant ainsi l'électrode 10a à la ligne Pa, donc à la distribution de potentiel V1 ou V2. Le signal à l'état logique "0" sur la ligne Rai ouvre également les contacteurs S2a et S3a, isolant ainsi l'électrode 10a de la ligne réceptrice I1. Il ferme en outre le contacteur S4a, mettant à un potentiel constant le tronçon conducteur entre les contacteurs S2a et S3a, faisant ainsi écran à tout couplage capacitif de l'électrode 10a à la ligne réceptrice I1 par les contacteurs ouverts S2,S3. Lorsque le signal de commande sur une ligne, Rog, par exemple, est à l'état logique "1", il ouvre par exemple le contacteur S1g, isolant ainsi l'électrode 10g de la ligne Pg, donc de la distribution de potentiel V1 ou V2. Ici, un simple contacteur S2 suffit puisque le potentiel sur la ligne P correspondante ne change pas lorsqu'il est ouvert. Le signal à l'état logique "1" sur la ligne Rgo ferme également les contacteurs S2g, S3g, et ouvre le contacteur S4g, reliant ainsi l'électrode 10g à la ligne réceptrice I2. L'électrode 10g devient ainsi momentanément réceptrice 10R, de même que l'électrode 10o, dont les contacteurs S1o, S2o, S3o, S4o, sont commandés par la même ligne Rgo. Il est bien entendu que les explications ci-dessus, données à titre d'exemple, sont valables pour toutes les électrodes 10, contacteurs S1 à S4 et lignes R.

Le signal capté par les électrodes momentanément réceptrices est acheminé par l'intermédiaire des lignes réceptrices I1 et I2 et des commutateurs électroniques S5 et S6, aux entrées de deux amplificateurs 31,32 échantillonnés par des contacteurs électroniques S7,S8. Chaque amplificateur 31,32 est suivi d'un échantillonneur-bloqueur 33,34, les sorties de ces derniers étant connectées aux entrées "+" et "-" d'un amplificateur différentiel 35 suivi d'un filtre passe-bas 36 et d'un comparateur 37. Du fait de l'amplificateur différentiel 35, et en admettant que le gain des deux amplificateurs 31,32 soit le même, on voit que l'ensemble se comporte comme un amplificateur différentiel, donc amplifiant la différence (VDI) des deux signaux à ses entrées. En échangeant les signaux aux entrées des amplificateurs 31,32, on change simplement la polarité de la différence de potentiel VDI.

La séquence des paires d'électrodes 10 devenant momentanément réceptrices 10R est la suivante, en commençant par l'instant O (tOR) de la figure 3 et en les désignant par leurs indices: go, ld, ai, fn, kc, ph, em, jb, og, dl, ia, nf, ck, hp, me, bj.

En reliant dans la séquence ci-dessus les électrodes ayant l'indice de gauche de la paire à l'entrée de l'amplificateur 31, celles ayant l'indice de droite à l'entrée de l'amplificateur 32, on obtiendrait, comme on l'a vu plus haut, un signal correspondant à la séquence de positions normalisée par rapport à Tx, ...,0, 5/8, 2/8, 7/8, 4/8, 1/8, 6/8, 3/8, 0, etc... En démodulant à la fréquence f/2, donc en multipliant les signaux captés par la séquence +1,-1,+1,-1, etc., on obtient après filtrage un signal périodique de fréquence f/8 donc de période 8Tck. Cette démodulation peut se faire après amplification, mais ici elle est faite avant les amplificateurs; à cet effet, il faut échanger les électrodes des paires d'électrodes momentanément réceptrices qui sont impaires ci-dessus (multiplication par la séquence +1,-1,+1,-1), les électrodes momentanément réceptrices étant alors reliées aux entrées des amplificateurs 31,32 dans la séquence:

go, dl, ai, nf, kc, hp, em, bj, og, ld, ia, fn, ck, ph, me, jb, l'électrode designée par le premier indice étant reliée à l'entrée de l'amplificateur 31, par le second à l'entrée de l'amplificateur 32. En reliant les contacteurs S3a, S3b, S3d, S3e, S3g, S3h, S3k, S3n à la ligne réceptrice I1, et les contacteurs S3c, S3f, S3i, S3j, S31, S3m, S3o, S3p, à I2 (fig. 3), et en reliant la ligne I1 à l'entrée de l'amplificateur 31, et la ligne I2 à l'entrée de l'amplificateur 32, les 8 premières paires d'électrodes dans la séquence ci-dessus seront correctement reliées, mais les 8 dernières paires d'électrodes seront inversées, d'ou la présence des commutateurs S5, S6, commandés par la ligne X1, qui croisent les connections des lignes I1, I2 aux entrées des amplificateurs 31,32. Le signal sur la ligne X1, monté à la figure 4, obtenu en divisant la fréquence du signal d'horloge par 16, assure les liaisons correctes sur toute la séquence.

On voit qu'une distribution d'électrodes réceptrices 10R isolées, donc non contiguës, est facile à connecter aux entrées d'amplificateurs 31,32; deux lignes réceptrices I1, I2, chaque électrode 10 n'étant reliée qu'à une de celles-ci, et deux commutateurs S5, S6, suffisent.

Les contacteurs S7,S8 sont commandés par le signal d'horloge CK. Après le déplacement de la distribution d'électrodes momentanément réceptrices, les amplificateurs 31,32, qui sont des amplificateurs inverseurs ont leur entrée reliée à leur sortie, les contacteurs S7,S8 étant fermés. Les potentiels seront alors pratiquement les mêmes, les amplificateurs étant identiques, donc la différence de potentiel VDI entre les entrées des amplificateurs 31,32 sera pratiquement nulle. Lorsque le signal d'horloge tombe à l'état logique "O", les contacteurs S7,S8 s'ouvrent et les signaux résultant du décalage de la distribution de potentiel, ayant lieu juste après cette transition du signal CK, seront amplifiés, puis échantillonnés par les circuits échantillonneurs-bloqueurs 33,34, avant d'être combinés dans l'amplificateur différentiel 35 dont le signal de sortie VH est montré à la figure 4. Un filtre passe-bas ou passe-bande 36 ne laisse passer que le signal démodulé de fréquence proche de f/8 en éliminant ses harmoniques, et on obtient le signal VO montré à la figure 4. Ce signal est alors transformé en un signal logique VC par le comparateur 37. Le déphasage de ce signal VC par rapport à un signal de référence de fréquence f/8, obtenu par division par 8 du signal d'horloge CK, est précisément la mesure du décalage entre le capteur 1 et la règle 2.

En effet, comme le signal VO montré à la fig. 4 a été débarassé de ses harmoniques, son déphasage peut être mesuré par les instants de ses passages par zéro, c'est-à-dire par les transitions du signal logique VC à la sortie du comparateur 37. Il est avantageux de tenir compte des deux transitions, montante et descendante, dudit signal VC, pour éliminer l'influence d'harmoniques impaires subsistant après filtrage ainsi que l'influence de tensions d'offset, ces influences agissant en sens opposé sur les deux transitions (en avançant l'instant d'une transition et en retardant celui de l'autre), donc se compensant. Le déphasage peut donc être mesuré en faisant par exemple la moyenne des instants de deux transitions (montante et descendante) successives, ce qui donne un instant "équidistant" des deux transitions, et en comparant cet instant à celui d'une des transitions dudit signal de fréquence f/8. Leur différence de temps, rapportée à la période du signal de référence, correspond au déphasage, compté en tours (360° ou $2\pi$ radians). Chaque "tour" de ce déphasage, donc chaque période de 8Tck (dans le cas présent) de différence de temps correspond à un décalage de la position spatiale entre règle et curseur de une période spatiale Tx. Il est clair que si la position relative entre règle et curseur ne change pas, le déphasage, donc la différence de temps restera la même. Afin d'obtenir une mesure plus fine de la position, il suffit de faire la moyenne d'une série de transitions.

Il est sans autre possible de mesurer des déplacements de plusieurs périodes spatiales Tx entre capteur et règle. Il suffit par exemple d'ajouter ou de retrancher un déplacement de Tx à chaque passage de 360 à 0 degrés, ou de 0 à 360 degrés, de l'angle de déphasage, avant de tenir compte de celui-ci.

Ces passages du déphasage de 360° à 0° et vice versa, donc du décalage de 8Tck à 0 et vice versa, peuvent être identifiés, si l'on mesure en permanence, c'est-à-dire en pratique dans des intervalles aussi rapprochés que possible, donc dans le meilleur cas l'intervalle séparant deux transitions du signal VC, et en ajoutant ou en retranchant un déplacement de Tx à chaque fois qu'on observe une transition de 8Tck à 0 ou vice versa entre deux mesures successives. La détermination de la position relative entre règle et capteur est donc absolue, et univoque dans l'intervalle Tx et incrémentale, le capteur devant rester enclenché pour suivre et garder la valeur du déplacement, en-dessus. Cette méthode de mesure d'un déphasage est donnée à titre d'example avantageux; il est bien entendu que bien d'autres méthodes connues pourraient également être utilisées.

Il peut arriver que le niveau de bruit sur le signal conduise à un signal de sortie du comparateur 37 également bruyant. Une solution classique dans ce cas est alors d'utiliser le signal de sortie d'un oscillateur, non illustré, dont la phase suit la phase moyenne du signal de sortie du comparateur 37, voire de l'amplificateur 35 ou du filtre 36, au moyen d'une boucle d'asservissement en phase (anglais : phase locked loop), bien connue de l'homme du métier.

Comme il a été dit plus haut, la description du fonctionnement d'un capteur conforme à l'invention a été faite en examinant le comportement d'électrodes 10 formant la partie centrale d'un réseau linéaire beaucoup plus long, donc étant toutes soumises aux mêmes influences. Ceci est bien entendu le cas pour des réseaux "sans fin" tel que celui du codeur rotatif de la figure 1B, mais pas pour les extrémités d'un réseau linéaire tel que celui de la figure 1A, où les électrodes 10 ne sont plus soumises aux mêmes influences et peuvent perturber la mesure, surtout s'il y a des défauts d'alignement entre règle et capteur. Un moyen évident est de ne pas tenir compte du signal des électrodes momentanément réceptrices 10R se trouvant trop près des extrémités du réseau; dans le cas d'un capteur conforme à l'invention, il suffit donc par exemple de ne pas relier ces électrodes aux lignes l1, l2, donc aux amplificateurs. Ce faisant, il faut veiller à ce que la totalité des électrodes momentanément réceptrices 10R susceptibles d'être reliées aux amplificateurs 31,32 comportent un nombre entier de périodes spatiales 2Tx, afin de conserver une distribution uniforme d'électrodes momentanément réceptrices sur une période T.

Ces mesures, simples et déjà efficaces, ne suffisent néanmoins pas à éliminer l'effet des défauts d'alignement entre règle et capteur, en particulier celui de l'inclinaison longitudinale du capteur sur la règle, qui provoque une variation monotone des capacités de couplage aux électrodes momentanément réceptrices 10R en fonction de leur position, le "centre de gravité" des électrodes momentanément réceptrices 10R se déplaçant dans l'intervalle d'une période spatiale Tx de la règle. L'erreur en résultant a donc également une période spatiale Tx, puisqu'elle est fonction de la position relative entre capteur et règle. Le filtrage de l'erreur lui enlèverait au plus ses harmoniques : afin d'enlever l'erreur restante de période Tx, une astuce simple consiste à répartir les électrodes 10 susceptibles d'être reliées aux amplificateurs sur deux régions, chacune d'une longueur présentant un nombre entier de périodes 2 Tx, séparées par une distance Tx/2, de manière à ce que leurs courbes d'erreurs, similaires mais décalées de Tx/2 tendent à se compenser.

Il est encore utile de mentionner qu'en tournant un capteur linéaire d'un angle donné, de manière à ce que le plan du réseau d'électrodes du capteur et la surface de la règle restent parallèles, au moins localement, et en inclinant les électrodes de la règle afin de rester parallèles à celles du capteur, il est possible de lire des règles ayant des périodes spatiales Tw bien plus grandes que celle du capteur Tx. Mis à part la possibilité de mesurer avec des régles présentant différents pas avec un capteur donné, ceci peut en particulier être intéressant si au moins deux capteurs d'inclinaison différente sont utilisés avec au moins deux règles correspondantes voisines, de période différente, afin d'avoir une mesure absolue dans l'intervalle de cette période Tw. L'angle de rotation du capteur pour lire un règle ayant une période Tw>>Tx tend vers 90 dégrés.

Il est bien entendu que les modes de réalisation décrits ci-dessus ne présentent aucun caractère limitatif et qu'ils peuvent recevoir toutes modifications désirables à l'intérieur du cadre tel que défini par la revendication 1.

Une possibilité consiste à améliorer les performances desdits seconds moyens, par exemple en utilisant un filtre 36 plus sélectif, de type passe-bande, afin d'augmenter le rapport signal/bruit. Dans le même but, on peut aussi augmenter l'amplitude du signal capté par les électrodes 10 en réduisant leur capacité parasite au substrat du capteur 1 : sur un pastille semi-conductrice, par exemple, une possiblité consiste à ajouter une couche de polyimide sous les électrodes. La réduction de capacité au substrat en résultant aura en plus l'avantage de réduire le courant capacitif dû aux commutations des électrodes entre V1 et V2.

L'invention pourrait être adaptée à des mesures bidimensionnelles en prévoyant, par exemple, un curseur présentant deux réseaux perpendiculaires d'électrodes 10 susceptibles de coopérer avec une règle 2 comportant des électrodes 200 en forme de damier. La règle 2 pourra présenter tous autres éléments 20 susceptibles d'influencer les signaux capacitifs émis et reçus, tels qu'un relief d'éléments en élévation et/ou en dépression, ces éléments pourront en outre être non-conducteurs ou conducteurs.

Enfin, l'intégration d'un capteur conforme à l'invention dans un micromoteur électrostatique harmonique, c'est-à-dire ayant un rotor cylindrique roulant sur un stator également cylindrique de diamètre légèrement différent, ou un rotor en forme de disque plan légèrement incliné roulant sur un stator plan. La vitesse de rotation du rotor dans un tel moteur est fonction de la vitesse angulaire du champ d'excitation et de la différence de longueur des chemins de roulement (formés par la succession des points ou lignes de contact entre rotor et stator). Cette différence étant difficile à reproduire, il est nécessaire de régler la vitesse angulaire du champ d'excitation pour avoir une vitesse constante de rotation du rotor (par exemple dans une montre). Ceci peut se faire idéalement par un capteur conforme à l'invention disposé sur le stator, lisant un relief ou une série d'électrodes du rotor servant de règle.

Les champs électriques créés par la distribution tournante de tensions sur le stator peuvent entrainer le rotor. Comme décrit plus haut, la position angulaire du rotor, donc aussi sa vitesse, peuvent être mesurés par le déphasage du signal VC. Un asservissement en phase permet alors d'obtenir une vitesse de rotation constante du rotor par l'effet de la variation de fréquence du signal d'horloge générant le champ faisant tourner le moteur et servant simultanément à exciter le capteur. L'instrument selon l'invention pourra bien entendu également être intégré dans d'autres types de moteurs dans le but de contrôler et/ou régler leur vitesse de rotation.

## Revendications

1. Instrument de mesure de longueurs ou d'angles comprenant un capteur capacitif (1) comportant des électrodes émettrices (10) destinées à émettre des signaux capacitifs et arrangées suivant au moins un premier réseau linéaire ou curvilinéaire, ces électrodes émettrices (10) étant connectées à des premiers moyens (30) générant sur ces électrodes une première distribution spatiale périodique de potentiels électriques se déplaçant par pas de transitions le long de ce premier réseau, le capteur (1) comportant des électrodes réceptrices (10R) destinées à capter des signaux capacitifs et reliées à des seconds moyens (31-37) pour déterminer la position relative le long de ce premier réseau d'un organe (2) présentant un second réseau spatialement périodique d'éléments (20) susceptibles d'influencer les signaux capacitifs émis et reçus, caractérisé en ce que le capteur (1) comprend des troisièmes moyens ($S_1$, $S_2$, $S_3$) pour déconnecter momentanément et tour à tour les électrodes émettrices (10) du premier réseau desdits premiers moyens (30) et pour les connecter momentanément aux seconds moyens (31-37) de façon qu'elles deviennent momentanément réceptrices, lesdits troisièmes moyens ($S_1$, $S_2$, $S_3$) étant agencés de façon que les électrodes momentanément réceptrices soient arrangées suivant une seconde distribution spatialement périodique, les premières et secondes distributions se déplaçant par pas de transitions en alternance de manière que le déplacement d'une distribution se fait dans les intervalles entre le déplacement de l'autre distribution, ledit organe (2) créant une fluctuation périodique du signal reçu sur les électrodes momentanément réceptrices (10R).

2. Instrument selon la revendication 1, caractérisé en ce que les seconds moyens (31 à 37) sont agencés de façon à évaluer la phase du signal reçu sur les électrodes momentanément réceptrices après démodulation pour déterminer la position relative entre le capteur et ledit organe.

3. Instrument selon la revendication 1, caractérisé en ce que lesdits premiers moyens (30) sont agencés de façon que la première distribution spatialement périodique de période $2T_x$ comprend des séries alternées d'un premier groupe de N électrodes reliées à un premier potentiel suivie d'un second groupe de N électrodes reliées à un second potentiel, N étant un nombre entier supérieur à 3, lesdits troisièmes moyens étant agencés de façon que la seconde distribution spatialement périodique est telle qu'au moins une électrode (10R) de chacun des groupes de N électrodes est déconnectée pour être momentanément réceptrice et telle que les électrodes momentanément réceptrices soient disposées entre au moins deux électrodes (10) reliées au même potentiel, ledit second réseau présentant une période Tx.

4. Instrument selon la revendication 3, caractérisé en ce qu'une seule électrode (10R) par groupe de N électrodes (10) est momentanément réceptrice.

5. Instrument selon la revendication 3, caractérisé en ce qu'une suite d'au moins deux électrodes successives par groupe de N électrodes est momentanément réceptrice.

6. Instrument selon la revendication 3, caractérisé en ce que les pas de transition de déplacement de la première et seconde distribution comportent M électrodes, M étant un nombre entier compris entre 3 et N-3, N et M ne possédant pas de diviseur commun entre eux.

7. Instrument selon la revendication 6, caractérisé en ce que les pas de transition du déplacement de la première et seconde distribution comportent un nombre M d'électrodes tel que M est un nombre entier proche de N/2.

8. Instrument selon une des revendications 3 à 6 caractérisé en ce que la distribution des électrodes appartenant audit premier ou second groupe avant un pas de transition de ladite première distribution est symétrique à la distribution des électrodes appartenant audit premier ou second groupe après le pas de transition de ladite première distribution, la ligne médiane de la ou des électrodes momentanément réceptrices (10R) se trouvant dans ledit premier ou second groupe constituant une droite de symétrie des deux distributions d'électrodes avant et après le pas de transition.

9. Instrument selon l'une des revendications 3 à 8, caractérisé en ce que les électrodes momentanément réceptrices (10R) disposées entre les électrodes reliées à un premier potentiel sont connectées à l'une des entrées d'un amplificateur différentiel (35) et en ce que les autres électrodes momentanément réceptrices disposées entre les électrodes reliées au second potentiel sont reliées à l'autre entrée d'un amplificateur différentiel.

10. Instrument selon la revendication 3, caractérisé en ce qu'il comprend un générateur de signaux (30) relié à 2N premières lignes ($P_a$-$P_p$) et agencé de façon à générer à l'aide d'un signal horloge une suite de signeaux émis sur l'une ($P_a$) des premières lignes et à décaler cette suite de signaux de 1 à 2N-1 périodes de ce signal horloge pour obtenir les 2N-1 autres suites de signaux sur les autres premières lignes ($P_b$-$P_p$), chaque électrode étant susceptible d'être reliée à l'une des premières lignes de façon à obtenir ladite première distribution spatiale périodique.

11. Instrument selon la revendication 10, caractérisé en ce que le générateur de signaux (30) est relié à N secondes lignes (Rai-Rhp) et agencé de façon à générer ladite seconde distribution, les signaux générés sur les N secondes lignes (Rai-Rhp) commandant l'ouverture et la fermeture de contacteurs électroniques d'entrée ($S_1$) ouvrant et fermant la liaison des électrodes avec les 2N premières lignes (Pa-Pp) et fermant, respectivement ouvrant des contacteurs de sortie ($S_2$, $S_3$) reliant les électrodes aux entrées d'un dispositif à amplification différentielle.

12. Instrument selon la revendication 11, caractérisé en ce que chaque électrode (10) est reliée à un premier contacteur de sortie ($S_2$) suivi d'un second contacteur de sortie ($S_3$), la partie commune entre les deux contacteurs de sortie étant mise à un potentiel constant, lorsque les deux contacteurs de sortie sont ouverts.

13. Instrument selon la revendication 11 ou 12, caractérisé en ce que les contacteurs de sortie ($S_2$, $S_3$) sont reliés à l'une de deux troisième lignes ($I_1$, $I_2$) connectées chacune par un commutateur ($S_5$, $S_6$) à des amplificateurs (31,32), suivi d'échantillonneurs (33,34) dont les sorties sont reliées aux entrées d'un amplificateur différentiel (35) suivi d'un filtre (36) et d'un comparateur (37).

14. Instrument selon la revendication 9, caractérisé en ce que les électrodes momentanément réceptrices (10R) se trouvant près des bords avant et arrière dudit premier réseau ne sont pas reliées audit seconds moyens (31-37), la totalité des électrodes momentanément réceptrices (10R) susceptibles d'être reliées comportant un nombre entier de périodes 2Tx.

**15.** Instrument selon la revendication 1, caractérisé en ce qu'il est adapté à des mesures bidimensionnelles en prévoyant un capteur comportant deux réseaux perpendiculaires d'électrodes susceptibles de coopérer avec ledit organe présentant un réseau en forme de damier d'éléments spatialement périodiques suivant deux directions orthogonales.

**16.** Utilisation de l'instrument selon l'une des revendictaions 1 à 14, caractérisée en ce que l'instrument est intégré dans un moteur dans le but de contrôler et/ou de régler sa vitesse de rotation.

## Claims

**1.** An instrument for measuring lengths or angles, comprising a capacitive probe (1) having emitting electrodes (10) designed for emitting capacitive signals and arranged to form at least one first linear or curvilinear grid, these emitting electrodes (10) being connected to first means (30) generating, on these electrodes, a first spatial periodical distribution of electric potentials moving by transition steps along this first grid, the probe (1) having receiving electrodes (10R) designed for detecting capacitive signals and connected to second means (31, 37) for determining the relative position along this first grid, of a member (2) having a second grid of spatially periodical members (20) capable of influencing the capacitive signals emitted and received, characterized in that the probe (1) includes third means ($S_1$, $S_2$, $S_3$) for disconnecting momentarily and in succession, the emitting electrodes (10) of the first grid from said first means (30) and for connecting momentarily the same to the second means (31-37) so that they become momentarily receiving electrodes, said third means ($S_1$, $S_2$, $S_3$) being arranged so that the momentarily receiving electrodes be arranged along a second spatially periodical distribution, the first and second distributions moving alternately by transition steps so that the displacement of one distribution takes place in the intervals between the displacement of the other distribution, said member (2) creating a periodical fluctuation of the signal received on the momentarily receiving electrodes (10R).

**2.** An instrument according to claim 1, characterized in that the second means (31 to 37) are arranged so as to evaluate the phase of the signal received on the momentarily receiving electrodes after demodulation, in order to determine the position of the probe relative to said member.

**3.** An instrument according to claim 1, characterized in that said first means (30) are arranged so that the first spatially periodical distribution of period $2T_x$ include alternating series of a first group of N electrodes connected to a first potential, followed by a second group of N electrodes connected to a second potential, N being an integral number higher than 3, said third means being arranged so that the second spatially periodical distribution be such that at least one electrode (10R) of each one of the groups of N electrodes be disconnected to become a momentarily receiving electrode or electrodes and so that the momentarily receiving electrodes be located between, at least, two electrodes (10) connected to the same potential, said second grid having a period Tx.

**4.** An instrument according to claim 3, characterized in that a single electrode (10R) per group of N electrodes (10) is a momentarily receiving electrode.

**5.** An instrument according to claim 3, characterized in that at least two successive electrodes per group of N electrodes are momentarily receiving electrodes.

**6.** An instrument according to claim 3, characterized in that the transition steps of displacement of the first and second distributions include M electrodes, M being an integral number comprised between 3 and N-3, N and M having no divider common to both.

**7.** An instrument according to claim 6, characterized in that the transition steps of displacement of the first and second distributions include a number M of electrodes, such that M is an integral number close to N/2.

**8.** An instrument according to one of claims 3 to 6, characterized in that the distribution of the electrodes, belonging to said first or second group before a transition step of said first distribution, is symmetrical with respect to the distribution of the electrodes belonging to said first or second group after the transition step of said first distribution, the median line of the momentarily receiving electrode or electrodes (10R) located in said first or second group, forming an axis of symmetry for the two distributions of electrodes before and after the transition step.

**9.** An instrument according to one of claims 3 to 8, characterized in that the momentarily receiving electrodes (10R) located between the electrodes connected to a first potential are connected to one of the inputs of a differential amplifier (35) and in that the other momentarily receiving electrodes, located between the electrodes connected to the second potential, are connected to the other input of a differential amplifier.

**10.** An instrument according to claim 3, characterized in that it comprises a signal generator (30) connected to 2N first lines ($P_a$-$P_p$) and arranged so as to generate, by means of a clock signal, a succession of signals emitted on one ($P_a$) of the first lines and so as to shift this succession of signals by 1 to 2N-1 periods from this clock signal to obtain the 2N-1 other successions of signals on the other first lines ($P_b$-$P_p$), each electrode being capable of being connected to one of the first lines so as to obtain said first spatial periodical distribution.

**11.** An instrument according to claim 10, characterized in that the signal generator (30) is connected to N second lines (Rai-Rhp) and arranged so as to generate said second distribution, the signals generated on the N second lines (Rai-Rhp) controlling the opening and the closing of input electronic contacts ($S_1$) opening and closing the connexion of the electrodes to the 2N first lines (Pa-Pp) and closing, respectively opening, the output contacts ($S_2$, $S_3$) connecting the electrodes to the inputs of a differential amplifier device.

**12.** An instrument according to claim 11, characterized in that each electrode (10) is connected to a first output contact ($S_2$) followed by a second output contact ($S_3$), the common portion between the two output contacts being set at a constant potential, when the two output contacts are open.

**13.** An instrument according to claim 11 or 12, characterized in that the output contacts ($S_2$, $S_3$) are connected to one of two third lines ($I_1$, $I_2$) connected each one by a switch ($S_5$, $S_6$) to amplifiers (31, 32) followed by samplers (33, 34) of which the outputs are connected to the inputs of a differential amplifier (35) followed by a filter (36) and a comparator (37).

**14.** An instrument according to claim 9, characterized in that the momentarily receiving electrodes (10R), located close to the front and rear edges of said first grid, are not connected to said second means (31-37), the totality of the momentarily receiving electrodes (10R) capable of being connected having an integral number of periods 2Tx.

**15.** An instrument according to claim 1, characterized in that it is capable of carrying out bidimensional measures, by providing a probe comprising two perpendicular grids of electrodes capable of cooperating with said member having a grid shaped as a chequer board of spatially periodical members along two orthogonal directions.

**16.** The use of an instrument according to one of claims 1 to 14, characterized in that the instrument is incorporated into a motor for the purpose of controlling and/or adjusting its rotational speed.

## Patentansprüche

**1.** Längen- oder Winkelmessinstrument mit einem kapazitiven Fühler (1) mit Sendeelektroden (10), die dazu bestimmt sind, kapazitive Signale auszusenden, und entlang zumindest eines ersten linearen oder gekrümmten Netzes angeordnet sind, wobei diese Sendeelektroden (10) an erste Mittel (30) angeschlossen sind, die an diesen Elektroden eine erste räumlich periodische Verteilung elektrischer Potentiale erzeugen, die sich in Übergangsschritten entlang dieses ersten Netzes verschieben, und der Fühler (1) Empfangselektroden (10R) hat, die dazu bestimmt sind, kapazitive Signale zu erfassen, und an zweite Mittel (31 bis 37) angeschlossen sind, um entlang dieses ersten Netzes die relative Lage eines Organs (2) zu bestimmen, das ein zweites, räumlich periodisches Netz von Elementen (20) aufweist, die in der Lage sind, die ausgesendeten und empfangenen kapazitiven Signale zu beeinflussen, dadurch gekennzeichnet, dass der Fühler (1) dritte Mittel ($S_1$, $S_2$, $S_3$) hat, um momentan und der Reihe nach die Sendeelektroden (10) des ersten Netzes von den benannten ersten Mitteln (30) abzukoppeln und sie momentan so an die zweiten Organe (31 bis 37) anzuschliessen, dass sie momentan Empfangselektroden werden, wobei die benannten dritten Mittel ($S_1$, $S_2$, $S_3$) so eingerichtet sind, dass die momentan empfangenden Elektroden gemäss einer zweiten räumlich periodischen Verteilung angeordnet sind, während sich die erste und zweite Verteilung in Übergangsschritten abwechselnd so verschiebt, dass sich die Verschiebung der einen Verteilung in den Pausen zwischen der Verschiebung der anderen Verteilung ereignet, wobei das benannte Organ (2) eine periodische Schwankung des von den momentan empfangenden Elektroden (10R) empfangenen Signals erzeugt.

**2.** Instrument gemäss Anspruch 1, dadurch gekennzeichnet, dass die zweiten Mittel (31 bis 37) so eingerichtet sind, dass sie die Phase des von den momentan empfangenden Elektroden empfangenen Signals nach der Demodulation auswerten, um die relative Lage des benannten Organs zum Fühler zu bestimmen.

**3.** Instrument gemäss Anspruch 1, dadurch gekennzeichnet, dass die benannten ersten Mittel (30) so eingerichtet sind, dass die erste, räumlich periodische Verteilung mit der Periode 2 $T_x$ abwechselnde Folgen einer ersten Gruppe von $N$ Elektroden, die an einem ersten Potential liegen, und einer zweiten Gruppe von $N$ Elektroden, die an einem zweiten Potential liegen, umfasst, wobei $N$ eine ganze Zahl grösser als drei ist und die benannten dritten Mittel so eingerichtet sind, dass die zweite, räumlich periodische Anordnung derart ist, dass zumindest eine Elektrode (10R) jeder der beiden Gruppen von $N$ Elektroden abgekoppelt ist, um momentan Empfangselektrode zu sein, und dass die momentan empfangenden Elektroden zwischen zumindest zwei Elektroden (10) angeordnet sind, die am selben Potential liegen, während das benannte zweite Netz eine Periode $T_x$ aufweist.

4. Instrument gemäss Anspruch 3, dadurch gekennzeichnet, dass eine einzige Elektrode (10R) je Gruppe von $N$ Elektroden (10) momentan Empfangselektrode ist.

5. Instrument gemäss Anspruch 3, dadurch gekennzeichnet, dass eine Folge von zumindest zwei aufeinanderfolgenden Elektroden je Gruppe von $N$ Elektroden momentan Empfangselektrode ist.

6. Instrument gemäss Anspruch 3, dadurch gekennzeichnet, dass die Übergangsschritte der Verschiebung der ersten und zweiten Verteilung $M$ Elektroden umfassen, wobei $M$ eine ganze Zahl zwischen 3 und $N$- 3 ist, während $N$ und $M$ keinen gemeinsamen Teiler haben.

7. Instrument gemäss Anspruch 6, dadurch gekennzeichnet, dass die Übergangsschritte der Verschiebung der ersten und zweiten Verteilung eine Anzahl $M$ von Elektroden umfassen, worin $M$ eine ganze Zahl ist und einen Wert nahe $N/2$ hat.

8. Instrument gemäss einem der Ansprüche 3 bis 6, dadurch gekennzeichnet, dass die Verteilung der Elektroden, die vor einem Übergangsschritt der benannten ersten Verteilung zu der benannten ersten oder zweiten Gruppe gehören, symmetrisch zur Verteilung der Elektroden ist, die nach dem Übergangsschritt der benannten ersten Verteilung zu der benannten ersten oder zweiten Gruppe gehören, wobei die Mittellinie der Elektrode oder Elektroden, die momentan Empfangselektroden (10R) sind und sich in der benannten ersten oder zweiten Gruppe befinden, eine Symmetriegerade der beiden Elektrodenverteilungen vor und nach dem Übergangsschritt darstellt.

9. Instrument gemäss einem der Ansprüche 3 bis 8, dadurch gekennzeichnet, dass die momentan empfangenden Elektroden (10R), die sich zwischen den Elektroden befinden, die an einem ersten Potential liegen, mit einem der Eingänge eines Differentialverstärkers (35) verbunden sind, und dass die anderen momentan empfangenden Elektroden, die sich zwischen den Elektroden befinden, die am zweiten Potential liegen, mit dem anderen Eingang eines Differentialverstärkers verbunden sind.

10. Instrument gemäss Anspruch 3, dadurch gekennzeichnet, dass es einen Signalgenerator (30) umfasst, der an $2N$ erste Leitungen ($P_a$ bis $P_p$) angeschlossen und so eingerichtet ist, dass er mit Hilfe eines Taktsignals eine Folge von Signalen erzeugt, die an eine ($P_a$) der ersten Leitungen ausgegeben wird, und diese Signalfolge um 1 bis $2N$-1 Perioden dieses Taktsignals verzögert, um die anderen $2N$ - 1 Signalfolgen für die anderen ersten Leitungen ($P_b$ bis $P_p$) zu erhalten, wobei jede Elektrode so an eine der ersten Leitungen angeschlossen werden kann, dass die benannte erste, räumlich periodische Verteilung erhalten wird.

11. Instrument gemäss Anspruch 10, dadurch gekennzeichnet, dass der Signalgenerator (30) an N zweite Leitungen *(Rai* bis *Rhp)* angeschlossen und so eingerichtet ist, dass er die benannte zweite Verteilung erzeugt, wobei die an den $N$ zweiten Leitungen *(Rai* bis *Rhp)* erzeugten Signale das Öffnen und Schliessen elektronischer Eingangsrelais ($S_1$) steuern, die die Verbindung der Elektroden mit den $2N$ ersten Leitungen ($P_a$ bis $P_p$) öffnen und schliessen und Ausgangsrelais ($S_2$, $S_3$) schliessen bzw. öffnen, die die Elektroden an die Eingänge einer Differentialverstärkervorrichtung legen.

12. Instrument gemäss Anspruch 11, dadurch gekennzeichnet, dass jede Elektrode (10) mit einem ersten Ausgangsrelais ($S_2$) verbunden ist, dem ein zweites Ausgangsrelais ($S_3$) folgt, wobei das gemeinsame Teilstück zwischen den beiden Ausgangsrelais an ein konstantes Potential gelegt wird, wenn die beiden Ausgangsrelais offen sind.

13. Instrument gemäss Anspruch 11 oder 12, dadurch gekennzeichnet, das die Ausgangsrelais ($S_2$, $S_3$) an eine der beiden dritten Linien ($l_1$, $l_2$) angeschlossen sind, die jede über einen Umschalter ($S_5$, $S_6$) mit Verstärkern (31, 32) verbunden ist, wobei die Umschalter von Zerhackern (33, 34) gefolgt sind, deren Ausgänge mit den Eingängen eines Differentialverstärkers (35) verbunden sind, dem ein Filter (36) und ein Komparator (37) folgen.

14. Instrument gemäss Anspruch 9, dadurch gekennzeichnet, dass die momentan empfangenden Elektroden (10R), die sich nahe dem vorderen und hinteren Ende des benannten ersten Netzes befinden, nicht an die benannten zweiten Mittel (31 bis 37) angeschlossen sind, wobei die Gesamtzahl der momentan empfangenden Elektroden (10R), die angeschlossen werden können, eine ganze Zahl von Perioden $2T_x$ umfasst.

15. Instrument gemäss Anspruch 1, dadurch gekennzeichnet, dass es für Messungen in zwei Dimensionen angepasst ist, indem ein Fühler vorgesehen ist, der zwei zueinander senkrechte Netze von Elektroden hat, die mit dem benannten Organ zusammenwirken können, das ein schachbrettartiges Netz von in zwei orthogonalen Richtungen räumlich periodischen Elementen aufweist.

16. Verwendung des Instruments gemäss einem der Ansprüche 1 bis 14, dadurch gekennzeichnet, dass das Instrument zum Zweck der Überwachung und/oder Regelung der Umdrehungsgeschwindigkeit in einen Motor integriert ist.

FIG. 1A

FIG. 1B

EP 0 648 998 B1

FIG. 2

A t0R

B t0S

C t1R

D t1S

10a  a b c d e f g h i j k l m n o p

10R  V2  10  10R  V1  10R  10R

0    Tx    2Tx    3Tx    4Tx    X

EP 0 648 998 B1

FIG. 3

FIG. 4